# EUROPEAN PATENT APPLICATION

(11) **EP 4 773 298 A1**
(43) Date of publication of application: **08.07.2026**
(21) Application number: 24883918.5
(22) Date of filing: 05.06.2024
(51) Int. Cl.: H01M 10/0567, H01M 10/056

(54) **ELECTROLYTE ADDITIVE, ELECTROLYTE, BATTERY AND ELECTRIC DEVICE**

(30) Priority: 01.11.2023 CN 202311447395
(71) Applicant: Contemporary Amperex Technology Co., Limited, Ningde, Fujian 352100 (CN)
(72) Inventor: CAO, Kaiyue, Ningde, Fujian 352100 (CN); WU, Ze, Ningde, Fujian 352100 (CN); LIU, Jiang, Ningde, Fujian 352100 (CN)
(74) Representative: Ziebig Hengelhaupt Intellectual Property Attorneys Patentanwaltskanzlei PartGmbB
(86) International application number: PCT/CN2024/097546
(87) International publication number: WO 2025/091907

(57) **Abstract**

An electrolyte solution additive, an electrolyte solution, a battery, and an electrical apparatus. The electrolyte solution additive includes vinylene carbonate, methylene methanedisulfonate, and an alkynyl compound. The alkynyl compound comprises 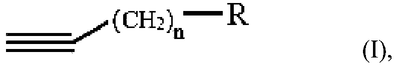 wherein n is 0-10, and R comprises 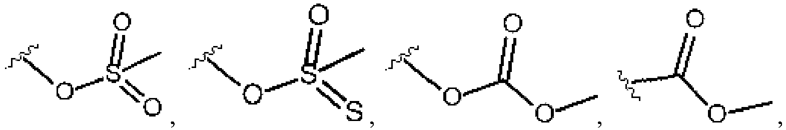 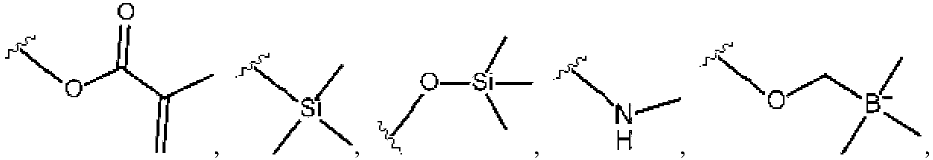 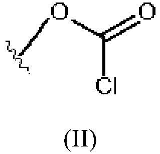 or

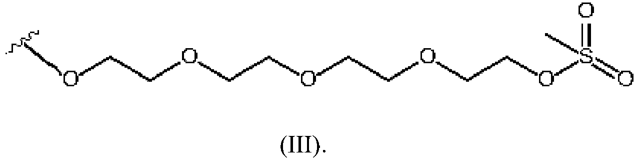

## Description

### PRIORITY INFORMATION

The present application claims priority to Chinese Patent Application No. 202311447395.5, filed with the China National Intellectual Property Administration, and entitled "Electrolyte Solution Additive, Electrolyte Solution, Battery, and Electrical Apparatus" filed on November 01, 2023, which is incorporated herein by reference in its entirety.

### TECHNICAL FIELD

The present application belongs to the field of batteries, and in particular, relates to an electrolyte solution additive, an electrolyte solution, a battery, and an electrical apparatus.

### BACKGROUND

In recent years, as the application range of batteries becomes wider, the batteries are widely used in various fields such as energy storage power systems of hydraulic power stations, thermal power stations, wind power stations, and solar power stations, as well as power tools, electric bicycles, electric motorcycles, electric vehicles, military equipment, and aerospace.

However, with the cycling of the batteries, a relatively thick SEI film (solid electrolyte film) is formed on a surface of a negative electrode. The SEI film is prone to cracking and recombination, resulting in low cycle performance and power performance of the batteries.

### SUMMARY

In view of the technical problems in the background, the present application provides an electrolyte solution additive to improve power performance and cycle performance of a battery.

To achieve the foregoing objective, a first aspect of the present application provides an electrolyte solution additive including vinylene carbonate, methylene methanedisulfonate, and an alkynyl compound, wherein the alkynyl compound comprises 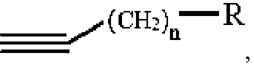 where N is 0-10, and R comprises 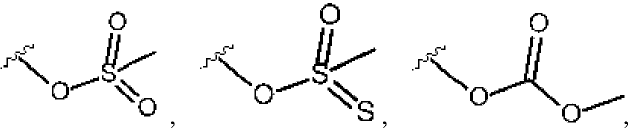 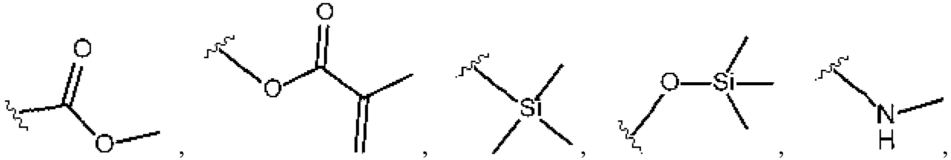 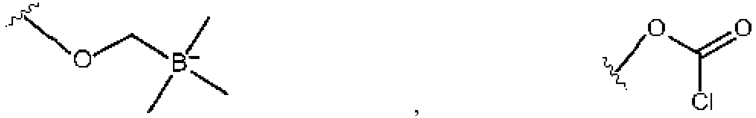 or

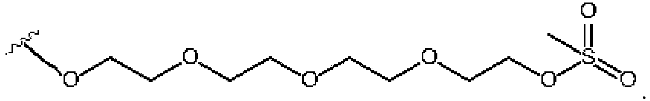

The present application at least includes the following beneficial effects: The electrolyte solution additive of the present application may form a thin and dense SEI film with a low interface impedance on a surface of a negative electrode, thereby improving power performance and cycle performance of a battery containing the electrolyte solution additive.

In some implementations, mass ratios of the vinylene carbonate and the methylene methanedisulfonate to the alkynyl compound are 1: 0.1-10: 0.1-5. In this way, power performance and cycle performance of a battery containing the electrolyte solution additive may be improved.

In some implementations, mass ratios of the vinylene carbonate and the methylene methanedisulfonate to the alkynyl compound are 1: 0.5-3: 0.5-2. In this way, power performance and cycle performance of a battery containing the electrolyte solution additive may be improved.

In some implementations, the R includes 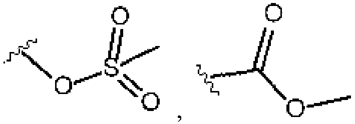 or 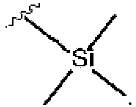 In this way, power performance and cycle performance of a battery containing the electrolyte solution additive may be improved.

In some implementations, the alkynyl compound includes at least one of 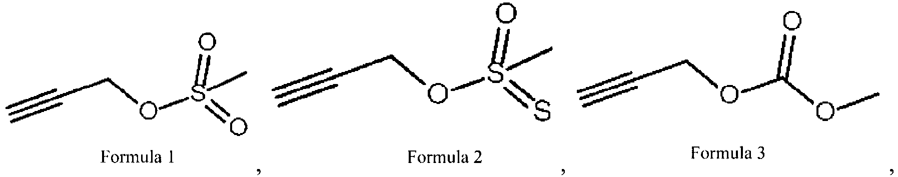 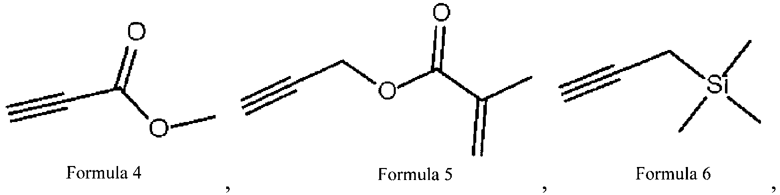 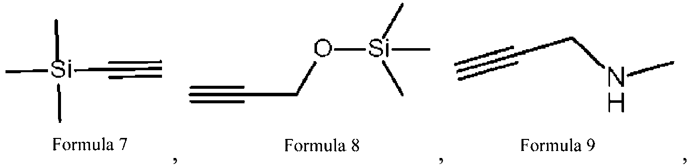 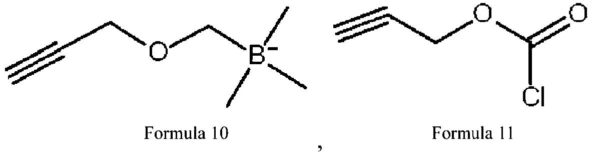 or 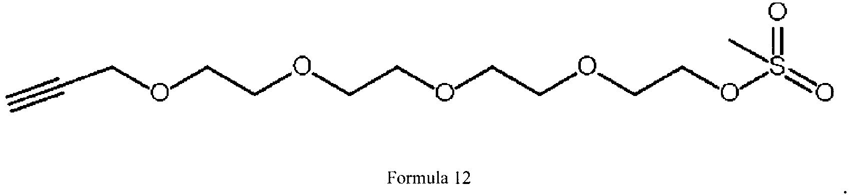 In this way, power performance and cycle performance of a battery containing the electrolyte solution additive may be improved.

In some implementations, the alkynyl compound includes at least one of 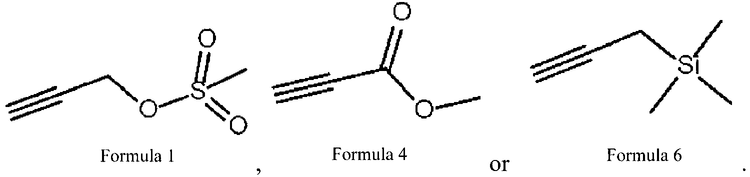 In this way, power performance and cycle performance of a battery containing the electrolyte solution additive may be improved.

In a second aspect of the present application, the present application provides an electrolyte solution including the electrolyte solution additive according to the first aspect. In this way, power performance and cycle performance of a battery containing the electrolyte solution additive may be improved.

In some implementations, based on a total mass of the electrolyte solution, a mass percentage of the electrolyte solution additive is 1%-20%. In this way, power performance and cycle performance of a battery containing the electrolyte solution additive may be improved.

In some implementations, based on a total mass of the electrolyte solution, a mass percentage of the electrolyte solution additive is 2%-10%. In this way, power performance and cycle performance of a battery containing the electrolyte solution additive may be improved.

In some implementations, based on a total mass of the electrolyte solution, a mass percentage of the vinylene carbonate is 0.5%-10%. In this way, power performance and cycle performance of a battery containing the electrolyte solution additive may be improved.

In some implementations, based on a total mass of the electrolyte solution, a mass percentage of the vinylene carbonate is 1%-5%. In this way, power performance and cycle performance of a battery containing the electrolyte solution additive may be improved.

In some implementations, based on a total mass of the electrolyte solution, a mass percentage of the methylene methanedisulfonate is 0.1%-8%. In this way, power performance and cycle performance of a battery containing the electrolyte solution additive may be improved.

In some implementations, based on a total mass of the electrolyte solution, a mass percentage of the methylene methanedisulfonate is 0.5%-3%. In this way, power performance and cycle performance of a battery containing the electrolyte solution additive may be improved.

In some implementations, based on a total mass of the electrolyte solution, a mass percentage of the alkynyl compound is 0.1%-5%. In this way, cycle performance of a battery containing the electrolyte solution additive may be improved.

In some implementations, based on the total mass of the electrolyte solution, the mass percentage of the alkynyl compound is 0.5%-3%. In this way, cycle performance of a battery containing the electrolyte solution additive may be improved.

In a third aspect of the present application, the present application provides a battery including the electrolyte solution according to the foregoing second aspect. Therefore, the battery has excellent power performance and cycle performance.

In a fourth aspect of the present application, the present application provides an electrical apparatus, including the battery according to the foregoing third aspect of the present application. Therefore, the battery has a longer service life.

Additional aspects and advantages of the present application will be partly provided in the following description, and partly become evident in the following description or understood through the practice of the present application.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is a schematic diagram of a battery according to an implementation of the present application.
FIG. 2 is an exploded view of the battery according to an implementation of the present application shown in FIG. 1.
FIG. 3 is a schematic diagram of a battery module according to an implementation of the present application.
FIG. 4 is a schematic diagram of a battery pack according to an implementation of the present application.
FIG. 5 is an exploded view of the battery pack according to an implementation of the present application shown in FIG. 4.
FIG. 6 is a schematic diagram of an electrical apparatus using a battery as a power supply according to an implementation of the present application.

### Description of reference signs:

1: Battery cell; 11: Housing; 12: Electrode assembly; 13: Cover plate; 2: Battery module; 3: Battery pack; 31: Upper case; 32: Lower case.

### DETAILED DESCRIPTION OF PREFERRED EMBODIMENTS

Embodiments of the technical solutions of the present application are described in detail below. The following embodiments are only used to more clearly illustrate the technical solutions of the present application, and thus are used as examples only, and are not intended to limit the protection range of the present application.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all implementations and optional implementations of the present application may be combined with each other to form new technical solutions.

Unless otherwise specified, all technical features and optional technical features of the present application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

At present, in view of the development of the market, the use of secondary batteries is becoming increasingly more widespread. Secondary batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of secondary batteries continues to expand, a market demand for power batteries continues to increase.

As initial charge is performed for a battery, an electrolyte and an organic solvent in an electrolyte solution may decompose and an SEI film including inorganic carbonate and organic materials is formed on a surface of a negative electrode sheet. The SEI film may isolate the electrolyte solution from the negative electrode sheet, thereby reducing side reactions between a negative electrode active material and the electrolyte solution to improve cycle performance of the battery. However, due to continuous expansion/contraction of the negative electrode active material in the negative electrode sheet and low toughness of the SEI film formed through inorganic carbonate and organic materials, the SEI film may be broken during cycle. As a cycle process continues, a new SEI film may continue to be formed on the surface of the negative electrode sheet. That is, breaking and recommendation of the SEI film may be carried out repeatedly during a cycle process, thereby increasing consumption of an organic solvent. In addition, when the organic solvent decomposes, gas is produced. That is, gas production is increased in the battery, thereby reducing a cycle life of a battery. Moreover, the formed SEI film including inorganic carbonate and organic matters is relatively thick, thereby increasing an internal resistance of a battery and reducing power performance of the battery.

In the present application, an electrolyte solution additive is used, which includesvinylene carbonate, methylene methanedisulfonate, and an alkynyl compound. The methylene methanedisulfonate and vinylene carbonate may undergo a reduction reaction on a surface of a negative electrode before formation and during initial charging and discharging to form an SEI film with a low interface impedance, thereby reducing a direct current resistance of a battery and improving power performance of the battery. Additionally, during a charging process of a battery, the alkynyl compound in the present application is reduced on the surface of the negative electrode to form alkynyl radicals. The alkynyl radicals may react with double bonds in vinylene carbonate to form a thin and dense copolymer on the surface of the negative electrode. The copolymer may prevent side reactions between the electrolyte solution and the negative electrode to improve gas production during cycle and storage processes of the battery. In addition, interaction between an R group on the copolymer and methylene methanedisulfonate may facilitate the methylene methanedisulfonate to be more uniformly dispersed on the surface of the negative electrode and to participate in film formation, so that a denser SEI film is formed on the surface of the negative electrode. The SEI film is not easily broken, thereby reducing consumption of an organic solvent and further reducing gas production in a battery to improve a cycle life of the battery.

The electrolyte solution additive disclosed in the embodiments of the present application is applicable to lithium-ion batteries and sodium-ion batteries, and the battery disclosed in the embodiments of the present application may be used in an electrical apparatus using a battery as a power source or various energy storage systems using a battery as an energy storage element. The electrical apparatus may include, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

A first aspect of the present application provides anelectrolyte solution additive. The electrolyte solution additive includes vinylene carbonate, methylene methanedisulfonate, and an alkynyl compound. The alkynyl compound includes 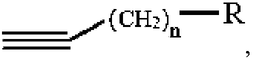 where N is 0-10, and R comprises

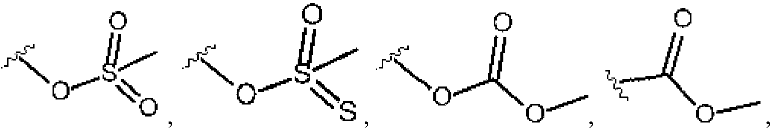

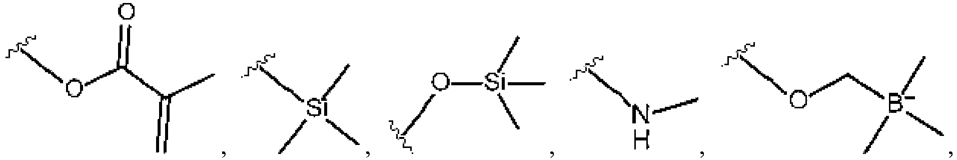

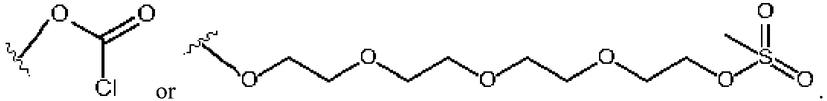

In the electrolyte solution additive in the present application, the methylene methanedisulfonate and vinylene carbonate may undergo a reduction reaction on a surface of a negative electrode before formation and during initial charging and discharging to form an SEI film with a low interface impedance, thereby reducing a direct current resistance of a battery and improving power performance of the battery. Additionally, during a charging process of a battery, the alkynyl compound in the electrolyte solution additive is reduced on the surface of the negative electrode. Formed alkynyl radicals may react with double bonds in vinylene carbonate to form a thin and dense copolymer on the surface of the negative electrode. The copolymer may prevent side reactions between the electrolyte solution and the negative electrode to improve gas production during cycle and storage processes of the battery. In addition, interaction between an R group on the copolymer and methylene methanedisulfonate may facilitate the methylene methanedisulfonate to be more uniformly dispersed on the surface of the negative electrode and to participate in film formation, so that a denser SEI film is formed on the surface of the negative electrode. The SEI film is not easily broken, thereby reducing consumption of an organic solvent and further reducing gas production in a battery to improve a cycle life of the battery.

In some implementations of the present application, mass ratios of the vinylene carbonate and the methylene methanedisulfonate to the alkynyl compound are 1: 0.3-10: 0.1-5, 1: 0.5-10: 0.1-5, 1: 0.7-10: 0.1-5, 1: 1-10: 0.1-5, 1: 2-8: 0.1-5, 1: 3-7: 0.1-5, 1: 4-6: 0.1-5, 1: 5-6: 0.1-5, 1: 0.1-10: 0.3-5, 1: 0.1-10: 0.5-5, 1: 0.1-10: 0.7-5, 1: 0.1-10: 1-5, 1: 0.1-10: 1.5-4.5, 1: 0.1-10: 2-4, 1: 0.1-10: 2.5-3.5, 1: 0.1-10: 2.5-3, etc. Therefore, the vinylene carbonate, methylene methanedisulfonate, and alkynyl compound are mixed at the foregoing ratio, an SEI film with a low interface impedance may be formed on a surface of a negative electrode, thereby reducing a direct current resistance of a battery and improving power performance of the battery. Additionally, the SEI film is thin and dense and may prevent side reactions between an electrolyte solution and a negative electrode, thereby reducing consumption of an organic solvent, improving gas production during cycle and storage processes of a battery, and improving a cycle life of the battery. In some implementations of this application, mass ratios of the vinylene carbonate and the methylene methanedisulfonate to the alkynyl compound are 1: 0.5-3: 0.5-2.

In some implementations of the present application, the alkynyl compound includes 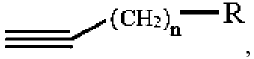 where n is 0-10. For example, n may be 2-8, 4-6, 3-5, etc. 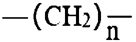 may be a linear alkyl or a branched alkyl or includes both linear and branched alkyl. R includes 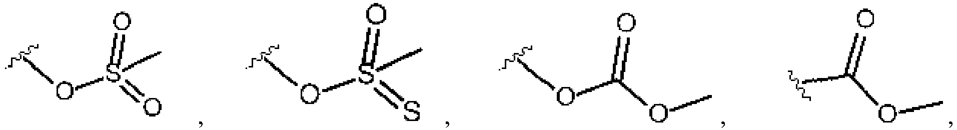 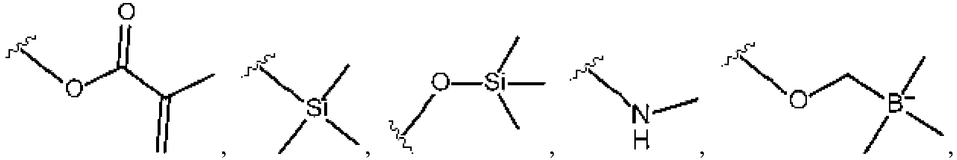 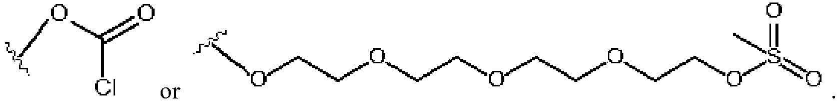 Therefore, the alkynyl compound having the composition of the present applicationmay react with double bonds in vinylene carbonate to form a thin and dense copolymer on a surface of a negative electrode. The copolymer may prevent side reactions between an electrolyte solution and the negative electrode to improve gas production during cycle and storage processes of a battery. In addition, interaction between an R group on the copolymer and methylene methanedisulfonate may facilitate the methylene methanedisulfonate to be more uniformly dispersed on the surface of the negative electrode and to participate in film formation, so that a denser SEI film is formed on the surface of the negative electrode. The SEI film is not easily broken, thereby reducing consumption of an organic solvent and further reducing gas production in a battery to improve a cycle life of the battery.

It needs to be noted that a bending bond "in the foregoing R group 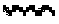 " refers to a binding site on a molecular structure, i.e., a binding site of R in a substitution 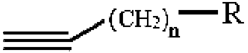 structure.

In some implementations of the present application, R on the 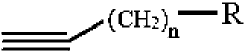 includes 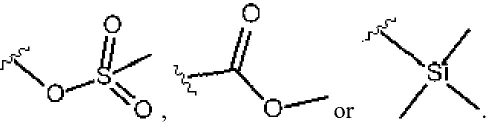 Therefore, the foregoing R group is introduced into the alkynyl compound, and thus it may be facilitated that methylene methanedisulfonate is more uniformly dispersed on a surface of a negative electrode and participates in film formation, a denser SEI film is formed on the surface of the negative electrode, and the SEI film is not easily broken, thereby reducing consumption of an organic solvent, further reducing gas production of a battery, and improving a cycle life of the battery. Additionally, an ion conductivity of the SEI film may be improved, thereby improving power performance of the battery.

In some implementations of the present application, the alkynyl compound includes at least one of 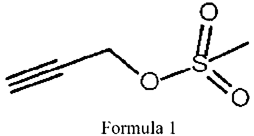 (CAS NO.:16156-58-4), 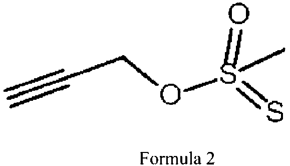 (CAS NO.:7651-65-2), 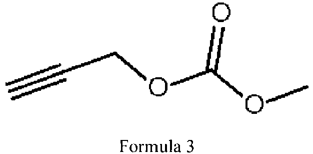 (CAS NO.:61764-71-4), 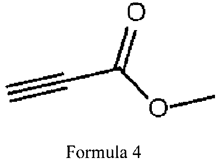 (CAS NO.:922-67-8), 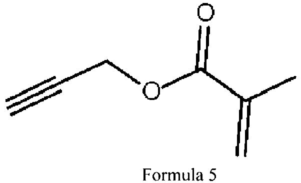 (CAS NO.:13861-22-8), 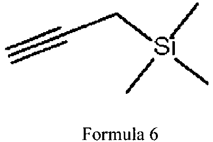 (CAS NO.:13361-64-3), 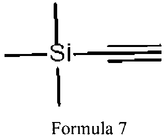 (CAS NO.:1066-54-2), 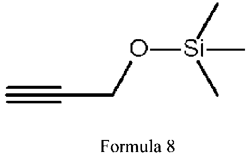 (CAS NO.:5582-62-7), 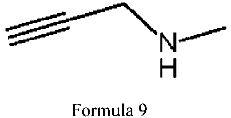 (CAS NO.:35161-71-8), 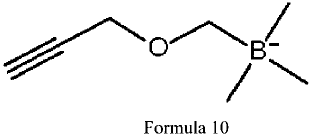 (CAS NO.:898544-65-5), 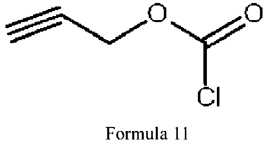 (CAS NO.:35718-08-2) or 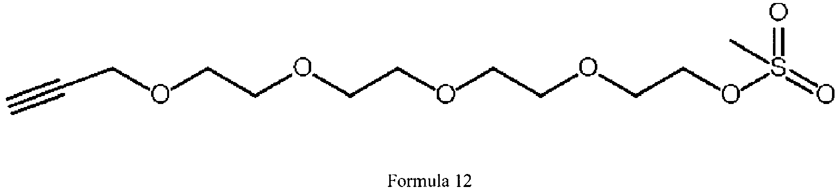 (CAS NO.:1233816-83-5). Therefore, the alkynyl compound having the composition of the present application may react with double bonds in vinylene carbonate to form a thin and dense copolymer on a surface of a negative electrode. The copolymer may prevent side reactions between an electrolyte solution and the negative electrode to improve gas production during cycle and storage processes of a battery. In addition, interaction between an R group on the copolymer and methylene methanedisulfonate may facilitate the methylene methanedisulfonate to be more uniformly dispersed on the surface of the negative electrode and to participate in film formation, so that a denser SEI film is formed on the surface of the negative electrode. The SEI film is not easily broken, thereby reducing consumption of an organic solvent and further reducing gas production in a battery to improve a cycle life of the battery. In some other implementations of the present application, the alkynyl compound includes at least one of 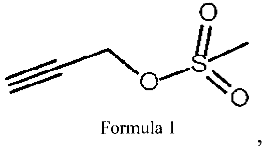 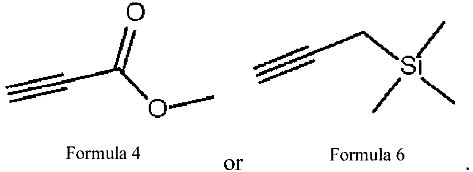 Therefore, the alkynyl compound is used, and thus it may be facilitated that methylene methanedisulfonate is more uniformly dispersed on a surface of a negative electrode and participates in film formation, a denser SEI film is formed on the surface of the negative electrode, and the SEI film is not easily broken, thereby reducing consumption of an organic solvent, further reducing gas production of a battery, and improving a cycle life of the battery. Additionally, an ion conductivity of the SEI film may be improved, thereby improving power performance of the battery.

In a second aspect of the present application, the present application provides an electrolyte solution including the electrolyte solution additive according to the first aspect. As such, in the electrolyte solution additive, the methylene methanedisulfonate and vinylene carbonate may undergo a reduction reaction on a surface of a negative electrode before formation and during initial charging and discharging to form an SEI film with a low interface impedance, thereby reducing a direct current resistance of a battery and improving power performance of the battery. Additionally, during a charging process of a battery, the alkynyl compound in the electrolyte solution additive is reduced on the surface of the negative electrode. Formed alkynyl radicals may react with double bonds in vinylene carbonate to form a thin and dense copolymer on the surface of the negative electrode. The copolymer may prevent side reactions between the electrolyte solution and the negative electrode to improve gas production during cycle and storage processes of the battery. In addition, interaction between an R group on the copolymer and methylene methanedisulfonate may facilitate the methylene methanedisulfonate to be more uniformly dispersed on the surface of the negative electrode and to participate in film formation, so that a denser SEI film is formed on the surface of the negative electrode. The SEI film is not easily broken, thereby reducing consumption of an organic solvent and further reducing gas production in a battery to improve a cycle life of the battery.

In some implementations of the present application, based on the total mass of the electrolyte solution, a weight percentage of the electrolyte solution additive is 1%-20%, such as 1.5%-18%, 2%-15%, 2.5%-15%, 3%-13%, 3.5%-10%, 4%-8%, 4.5%-6%, or 4.5%-5%. Therefore, the electrolyte solution additive having the foregoing content is added to an electrolyte solution, so that an SEI film with a low interface impedance may be formed on a surface of a negative electrode, thereby reducing a direct current resistance of a battery and improving power performance of the battery. Additionally, the SEI film is thin and dense and thus may reduce consumption of an organic solvent. The SEL film may prevent side reactions between the electrolyte solution and the negative electrode, thereby improving gas production during cycle and storage processes of a battery, and improving a cycle life of the battery. In some other implementations of the present application, based on a total mass of the electrolyte solution, a mass percentage of the electrolyte solution additive is 2%-10%. In this way, power performance and cycle performance of a battery containing the electrolyte solution additive may be improved.

In some implementations of the present application, based on the total mass of the electrolyte solution, a mass percentage of the vinylene carbonate is 0.5%-10%, such as 1%-10%, 1.5%-9.5%, 2%-9%, 2.5%-8.5%, 3%-8%, 3.5%-7.5%, 4%-7%, 4.5%-6.5%, 5%-6%, or 5.5%-6%. Therefore, the vinylene carbonate having the foregoing content is added to an electrolyte solution, so that an SEI film with a low interface impedance may be formed on a surface of a negative electrode, thereby reducing a direct current resistance of a battery and improving power performance of the battery. Additionally, the SEI film is thin and dense and thus may reduce consumption of an organic solvent. The SEL film may prevent side reactions between the electrolyte solution and the negative electrode, thereby improving gas production during cycle and storage processes of a battery, and improving a cycle life of the battery. In some implementations of the present application, based on a total mass of the electrolyte solution, a mass percentage of the vinylene carbonate is 1%-5%. In this way, power performance and cycle performance of a battery containing the electrolyte solution additive may be improved.

In some implementations of the present application, based on the total mass of the electrolyte solution, a weight percentage of the methylene methanedisulfonate is 0.1%-8%, such as 0.3%-8%, 0.5%-8%, 0.7%-8%, 1%-8%, 1.5%-7.5%, 2%-7%, 2.5%-6.5%, 3%-6%, 3.5%-5.5%, 4%-5%, or 4.5%-5%. Therefore, the methylene methanedisulfonate having the foregoing content is added to an electrolyte solution, so that an SEI film with a low interface impedance may be formed on a surface of a negative electrode, thereby reducing a direct current resistance of a battery and improving power performance of the battery. Additionally, the SEI film is thin and dense and thus may reduce consumption of an organic solvent. The SEL film may prevent side reactions between the electrolyte solution and the negative electrode, thereby improving gas production during cycle and storage processes of a battery, and improving a cycle life of the battery. In some implementations of the present application, based on a total mass of the electrolyte solution, a mass percentage of the methylene methanedisulfonate is 0.5%-3%. In this way, power performance and cycle performance of a battery containing the electrolyte solution additive may be improved.

In some implementations of the present application, based on the total mass of the electrolyte solution, a mass percentage of the alkynyl compound is 0.1%-5%, such as 0.3%-5%, 0.5%-5%, 0.7%-5%, 1%-5%, 1.5%-4.5%, 2%-4%, 2.5%-3.5%, or 3%-3.5%. Therefore, the alkynyl compound having the foregoing content is added to an electrolyte solution, so that a thin and dense copolymer may be formed on a surface of a negative electrode. The copolymer may prevent side reactions between the electrolyte solution and the negative electrode, thereby improving gas production during cycle and storage of a battery, and improving a cycle life of the battery. In some implementations of the present application, based on the total mass of the electrolyte solution, a mass percentage of the alkynyl compound is 0.5%-3%. In this way, cycle performance of a battery containing the electrolyte solution additive may be improved.

In some implementations of the present application, the electrolyte solution may further include an electrolyte salt and a solvent.

In some implementations of the present application, the battery is a lithium-ion battery, and the electrolyte salt may include at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, or lithium tetrafluorooxalatophosphate.

In some implementations of the present application, the battery is a sodium-ion battery, and the electrolyte salt may include at least one of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, or sodium bis(trifluoromethylsulfonyl)imide.

In some implementations of the present application, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, glycol dimethyl ether, ethyl methyl sulfone, or diethyl sulfone.

In some implementations of the present application, the electrolyte solution further optionally includes an additive. For example, the additive may include a negative pole film-forming additive or a positive pole film-forming additive, and may further include an additive capable of improving specific performance of a battery, for example, an additive for improving overcharge performance of a battery, or an additive for improving high-temperature or low-temperature performance of a battery.

In a third aspect of the present application, the present application provides a battery including the electrolyte solution according to the foregoing second aspect. Therefore, the battery has excellent power performance and cycle performance.

Generally, a battery includes a positive electrode sheet, a negative electrode sheet, an electrolyte solution, and a separator. During charge and discharge of the battery, active ions are intercalated and deintercalated back and forth between the positive electrode sheet and the negative electrode sheet. The electrolyte solution functions to conduct ions between the positive electrode sheet and the negative electrode sheet. The separator is disposed between the positive electrode sheet and the negative electrode sheet, to mainly prevent positive and negative electrodes from being short-circuited and allow ions to pass through.

In the battery, the positive electrode sheet usually includes a positive electrode current collector and a positive electrode active material layer. The positive electrode active material layer is arranged on at least one side of the positive electrode current collector.

As an example, the positive electrode current collector has two surfaces opposite to each other in its own thickness direction, and the positive electrode active material layer is disposed on either one or both of the two opposite surfaces of the positive electrode current collector.

In some implementations of the present application, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material such as aluminum, aluminum alloy, nickel, nickel alloy, titanium, titanium alloy, silver, or silver alloy on a base material of a polymer material such as polypropylene (PP), polyethylene terephthalate (PET), polybutylene terephthalate (PBT), polystyrene (PS), or polyethylene (PE).

In some implementations of the present application, the positive electrode active material layer includes a positive electrode active material. A specific type of the positive electrode active material is not limited, and an active material which can be used for a positive electrode of a battery known in the art may be used, and any person skilled in the art may select the material according to actual requirements.

As an example, when the positive electrode sheet is used for a lithium-ion battery, a positive active material which is known in the art for the lithium-ion battery may be used for the positive active material. As an example, the positive pole active material may include at least one of olivine-structured lithium-containing phosphate, lithium-transition metal oxide, and their respective modifying compounds. However, the present application is not limited to these materials, and other conventional materials that can be used as a positive active material of a battery may also be used. These positive pole active materials may be used alone or in combination of two or more thereof. Examples of the lithium transition metal oxide may include, but are not limited to, at least one of lithium cobalt oxide (e.g., LiCoO₂), lithium nickel oxide (for example, LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.8}Co_{0.15}Al_{0.05}O₂), modifying compounds thereof, and the like. Examples of the olivine-structured lithium-containing phosphate may include, but are not limited to, at least one of lithium iron phosphate (e.g., LiFePO₄ (which may also be simply referred to as LFP)), a composite of lithium iron phosphate and carbon, lithium manganese phosphate (e.g., LiMnPO₄), a composite material of lithium manganese phosphate and carbon, lithium ferro-manganese phosphate, or a composite material of lithium ferro-manganese phosphate and carbon.

As an example, when the positive electrode sheet is used for a sodium ion battery, a positive active material which is known in the art for the sodium ion battery may be used for the positive active material. As an example, the positive electrode active material may include, but is not limited to, at least one of a layered transition metal oxide, a polyanionic compound, and a Prussian blue analog.

As an example of the layered transition metal oxide, the following can be listed:
Na₁₋ₓCuₕFeₖMn₁M¹ₘO_{2-y}, where M¹ includes at least one of Li, Be, B, Mg, Al, K, Ca, Ti, Co, Ni, Zn, Ga, Sr, Y, Nb, Mo, In, Sn, or Ba; and 0 *< x* ≤ 0.33, 0 < *h* ≤ 0.24, 0 ≤ *k* ≤ 0.32, 0 < *l* ≤ 0.68, 0 ≤ *m* < 0.1, *h* + *k* + *l* + *m* = 1, and 0 ≤ *y* < 0.2;
Na_{0.67}Mn_{0.7}Ni_{z}M²_{0.3-z}O₂, where M² includes at least one of Li, Mg, Al, Ca, Ti, Fe, Cu, Zn, or Ba; and 0 < *z* ≤ 0.1; and
NaₐLi_{b}Ni_{c}Mn_{d}FeₑO₂, where 0.67 < *a ≤* 1, 0 *< b <* 0.2, 0 < *c* < 0.3, 0.67 < *d + e <* 0.8, and *b + c + d + e* = 1.

As an example of the polyanionic compound, the following can be listed:
A¹_{f}M³_{g}(PO₄)ᵢOⱼX¹₃₋ⱼ, where A¹ includes at least one of H, Li, Na, K, or NH₄, M³ includes at least one of Ti, Cr, Mn, Fe, Co, Ni, V, Cu, or Zn; X¹ is at least one of F, Cl, or Br; and 0 *< ƒ* ≤ 4, 0 < *g* ≤ 2, 1 ≤ *i* ≤ 3, and 0 *≤ j* ≤ 2;
NaₙM1⁴O₄X², where M⁴ includes at least one of Mn, Fe, Co, Ni, Cu, or Zn; X² is at least one of F, Cl, or Br; and 0 *< n* ≤ 2;
NaₚM⁵_{q}(SO₄)₃, where M⁵ includes at least one of Mn, Fe, Co, Ni, Cu, or Zn; and 0 <*p* ≤ 2, or 0 <*q* ≤ 2; and
NaₛMnₜFe₃₋ₜPO₄)₂(P₂O₇), where 0 < *s* ≤ 4, 0 ≤ *t* ≤ 3, and for example, *t* is 0, 1, 1.5, 2, or 3.

As an example of the Prussian blue analog, the following can be listed:
AᵤM⁶ᵥ[M⁷(CN)₆]_{w}·xH₂O, where A includes at least one of H⁺, NH₄⁺, an alkali metal cation, or an alkaline earth metal cation; M⁶ and M⁷ each independently includes at least one of transition metal cations; and 0 *< u* ≤ 2, 0 < *v* ≤ 1, 0 < *w* ≤ 1, and 0 *< x* < 6. For example, A includes at least one of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺, or Ra²⁺; and M⁶ and M⁷ each independently include a at least one cation of Ti, V, Cr, Mn, Fe, Co, Ni, Cu, Zn, Sn, or W.

Deintercalation and consumption of Li or Na occur during charging and discharging of the battery, and the molar content of Li or Na varies when the battery is discharged to different states. In the enumeration of the positive electrode material in the present application, the molar content of Li or Na is an initial state of the material, that is, a state before adding. The positive electrode material is applied to a battery system, and the molar content of Li or Na changes after charging and discharging cycles.

In the enumeration of the positive electrode material in the present application, the molar content of oxygen is only a theoretical state value, the molar content of oxygen changes due to the release of oxygen from a lattice, and the actual molar content of oxygen fluctuates.

In some implementations of the present application, the positive electrode active material layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

In some implementations of the present application, the positive electrode active material layer further optionally includes a conductive agent. As an example, the conductive agent may include at least one of superconducting carbon, acetylene black, carbon black, ketjen black, carbon dots, carbon nanotubes, graphene, or carbon nanofibers.

In some implementations, the positive electrode sheet may be prepared by dispersing the above components for preparing a positive electrode sheet, for example, a positive electrode active material, a conductive agent, a binder, and any other components in a solvent (for example, N-methylpyrrolidone) to form a positive electrode slurry, and applying the positive electrode slurry to a positive electrode current collector, followed by drying, cold pressing, and the like.

In some implementations of the present application, the negative electrode sheet includes a negative electrode current collector and a negative electrode disposed on at least one surface of the negative electrode current collector, the negative electrode active material layer including a negative electrode active material.

As an example, the negative electrode current collector has two surfaces opposite in its own thickness direction, and the negative electrode active material layer is provided on either one or both of the two opposite surfaces of the negative electrode current collector.

In some implementations of the present application, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some implementations of the present application, the negative pole active material may be a negative pole active material well-known in the art for batteries. As an example, the negative active material may include at least one of the following materials: synthetic graphite, natural graphite, soft carbon, hard carbon, a silicon-based material, a tin-based material, lithium titanate, and the like. The silicon-based material may include at least one of elemental silicon, a silicon-oxygen compound, a silicon-carbon composite, a silicon-nitrogen composite, or a silicon alloy. The tin-based material may include at least one of elemental tin, a tin-oxygen compound, or a tin alloy. However, the present application is not limited to these materials, and another conventional material that can be used as a negative active material of a battery may also be used. These negative active materials may be used alone or in combination of two or more thereof.

In some implementations of the present application, the negative electrode active material layer further optionally includes a negative electrode binder. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), poly(methyl acrylic acid) (PMAA), and carboxymethyl chitosan (CMCS).

In some implementations of the present application, the negative electrode active material layer further optionally includes a conductive agent. The conductive agent may include at least one of superconducting carbon, acetylene black, carbon black, ketjen black, carbon dot, carbon nanotube, graphene, or carbon nanofiber.

In some implementations of the present application, the negative electrode active material layer further optionally includes other auxiliaries, for example, a thickener (such as sodium carboxymethyl cellulose (CMC-Na)).

In some implementations of the present application, the negative electrode sheet may be prepared in the following manner: dispersing the above-mentioned components for preparing the negative electrode sheet, for example, the negative electrode active material, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode sheet.

The type of the separator is not particularly limited in the present application, and any well-known porous separator with good chemical stability and mechanical stability may be used.

In some implementations of the present application, the material of the separator may include at least one of glass fiber, non-woven fabric, polyethylene, polypropylene, or polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some implementations, the positive electrode sheet, the negative electrode sheet, and the separator may be manufactured into the electrode assembly through a winding process or a lamination process.

In some implementations, the secondary battery may include an outer package. The outer package may be used to package the foregoing electrode assembly and electrolyte.

In some implementations, the outer package of the secondary battery may be a hard case, such as a hard plastic case, an aluminum case, a steel case, or the like. The outer package of the secondary battery may also be a pouch, such as a bag-type pouch. The material of the pouch may be plastic, and examples of the plastic include polypropylene, polybutylene terephthalate, and polybutylene succinate.

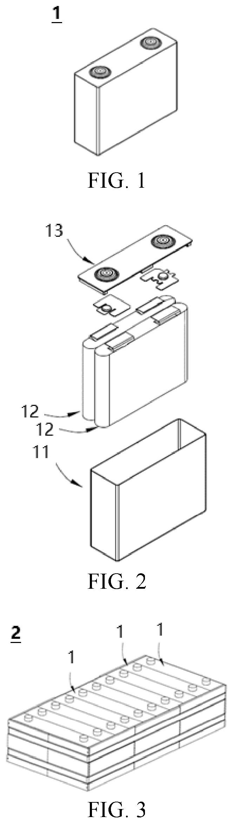

The shape of the battery is not particularly limited in the present application, and may be a cylindrical shape, a square shape, or any other shape. For example, FIG. 1 shows a battery cell 1 with a square structure as an example.

In some implementations, referring to FIG. 2, the outer package may include a housing 11 and a cover plate 13. The housing 11 may include a bottom plate and side plates connected to the bottom plate, and the bottom plate and the side plates define an accommodating chamber. The housing 11 has an opening communicating with the accommodating chamber, and the cover plate 13 can cover the opening to close the accommodating chamber. The positive electrode sheet, the negative electrode sheet, and the separator may be formed into an electrode assembly 12 through a winding process or a lamination process. The electrode assembly 12 is packaged within the accommodating chamber. The electrolyte solution is impregnated into the electrode assembly 12. There may be one or a plurality of electrode assemblies 12 included in the battery cell 1, and those skilled in the art may perform selection according to specific actual requirements.

In some implementations, the battery may be assembled into a battery module, there may be one or a plurality of batteries included in the battery module, and those skilled in the art may make a selection based on the application and capacity of the battery module.

FIG. 3 shows a battery module 2 as an example. Referring to FIG. 3, in the battery module 2, a plurality of battery cells 1 may be arranged sequentially in a longitudinal direction of the battery module 2. Certainly, the battery cells may alternatively be arranged in any other manner. Further, the plurality of battery cells 1 may be fastened by using fasteners.

Optionally, the battery module 2 may further include a casing having an accommodating space in which the plurality of battery cells 1 are accommodated.

In some implementations, the battery modules may be further assembled into a battery pack, and there may be one or a plurality of battery modules included in the battery pack, and the specific number may be selected by those skilled in the art according to the application and capacity of the battery pack.

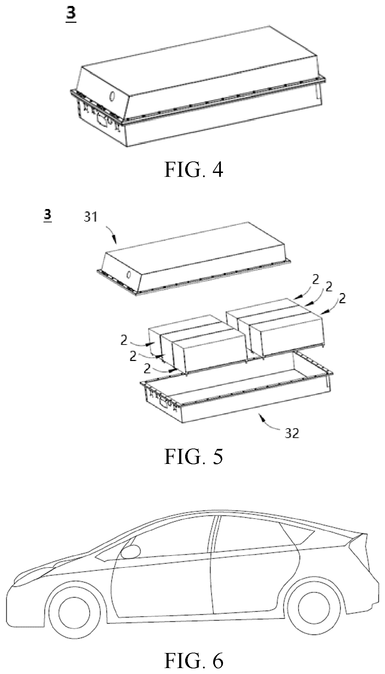

FIG. 4 and FIG. 5 show a battery pack 3 as an example. Referring to FIG. 6 and FIG. 7, a battery case and a plurality of battery modules 2 disposed in the battery case may be included in the battery pack 3. The battery case includes an upper case 31 and a lower case 32, the upper case 31 being capable of covering the lower case 32 and forming a closed space for accommodating the battery modules 2. The plurality of battery modules 2 may be arranged in any manner in the battery case.

In addition, the present application further provides an electrical apparatus including at least one of a secondary battery, a battery module, or a battery pack provided by the present application. The secondary battery, the battery module, or the battery pack may be used as a power source of the electrical apparatus and may also be used as an energy storage unit of the electrical apparatus. The electrical apparatus may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

The secondary battery, the battery module, or the battery pack may be selected according to use requirements of the electrical apparatus.

FIG. 6 shows an electrical apparatus as an example. The electrical apparatus is a pure electric vehicle, a hybrid electric vehicle, a plug-in hybrid electric vehicle, or the like. In order to meet the demand for high power and high energy density of the secondary battery by the electrical apparatus, a battery pack or a battery module may be used.

In another example, the electrical apparatus may be a cell phone, a tablet computer, a notebook computer, or the like. This electric apparatus is generally required to be thin and lightweight, and may use a battery as a power supply.

Examples of the present application are described below. The examples described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

### Example 1

### (1) Preparation of electrolyte solution

Vinylene carbonate, methylene methanedisulfonate, and propargyl methanesulfonate (Formula 1) were mixed in a mass ratio of 1: 1: 1 to obtain an electrolyte solution additive. Then, ethylene carbonate, diethyl carbonate, and dimethyl carbonate were mixed in a mass ratio of 1: 1: 1 to obtain an organic solvent, which was then uniformly mixed with LiPF₆ to obtain a basic electrolyte solution. The foregoing electrolyte solution additive was added to the basic electrolyte solution to obtain an electrolyte solution, where the mass ratios of vinylene carbonate, methylene methanedisulfonate, and propargyl methanesulfonate were 2%, 2%, and 2%, respectively, based on the total amount of the electrolyte solution being 100%.

### (2) Preparation of positive electrode sheet

Lithium iron phosphate, a binder of PVDF, and a conductive agent of acetylene black were added to an N-methylpyrrolidone solvent at a mass ratio of 95: 3: 2, and stirred uniformly to prepare a positive electrode slurry. The positive electrode slurry was coated on both side surfaces of a current collector aluminum foil, followed by drying, cold-pressing, and slitting to obtain a positive electrode sheet.

### (3) Preparation of negative electrode sheet

Synthetic graphite, a conductive agent of carbon black, a thickener of sodium carboxymethyl cellulose (CMC-Na), and a binder of styrene-butadiene rubber were added to deionized water at a mass ratio of 95: 1: 2: 2 and stirred uniformly to obtain a negative electrode slurry. The negative electrode slurry was coated on a current collector copper foil, followed by drying, cold pressing, and slitting to obtain a negative electrode sheet.

### (4) Separator

A polyethylene film was used as a separator.

### (5) Preparation of a lithium-ion battery

The positive electrode sheet, the separator, and the negative electrode sheet were stacked in order such that the separator was located between the positive electrode sheet and the negative electrode sheet to play a separating role, and then the they were wound to obtain an electrode assembly; and the electrode assembly was placed into an outer package, the above prepared electrolyte solution was injected into a dried lithium-ion battery, and subjected to vacuum sealing, standing, chemical formation, and shaping to obtain a lithium-ion battery.

Examples 2-41 and Comparative Examples 1-4 differ from Example 1 in that the compositions and contents of the electrolyte solution additives in the electrolyte solutions are different, as shown in detail in Table 1, and other steps are the same as those in Example 1 to obtain lithium-ion batteries.

**Table 1**

| Examples | Electrolyte Solution Additive | | | | | |
|---|---|---|---|---|---|---|
| | Mass Percentage of Vinylene Carbonate in Electrolyte Solution | Mass Percentage of Methylene Methanedisulfonate in Electrolyte Solution | Alkynyl Compound | | Mass Ratios of Vinylene Carbonate and Methylene Methanedisulfonate to Alkynyl Compound | Mass Percentage of Electrolyte Solution Additive in Electrolyte Solution |
| | | | Composition | Mass Percentage of Alkynyl Compound in Electrolyte Solution | | |
| Example 1 | 2% | 2% | Formula 1 | 2% | 1:1:1 | 6.0% |
| Example 2 | 2% | 1% | Formula 1 | 2% | 1:0.5:1 | 5.0% |
| Example 3 | 2% | 2% | Formula 1 | 1% | 1:1:0.5 | 5.0% |
| Example 4 | 2% | 1% | Formula 1 | 1% | 1:0.5:0.5 | 4.0% |
| Example 5 | 2% | 2% | Formula 3 | 2% | 1:1:1 | 6.0% |
| Example 6 | 2% | 1% | Formula 3 | 2% | 1:0.5:1 | 5.0% |
| Example 7 | 2% | 2% | Formula 3 | 1% | 1:1:0.5 | 5.0% |
| Example 8 | 2% | 1% | Formula 3 | 1% | 1:0.5:0.5 | 4.0% |
| Example 9 | 2% | 2% | Formula 2 | 2% | 1:1:1 | 6.0% |
| Example 10 | 2% | 2% | Formula 4 | 2% | 1:1:1 | 6.0% |
| Example 11 | 2% | 2% | Formula 5 | 2% | 1:1:1 | 6.0% |
| Example 12 | 2% | 2% | Formula 6 | 2% | 1:1:1 | 6.0% |
| Example 13 | 2% | 2% | Formula 7 | 2% | 1:1:1 | 6.0% |
| Example 14 | 2% | 2% | Formula 8 | 2% | 1:1:1 | 6.0% |
| Example 15 | 2% | 2% | Formula 9 | 2% | 1:1:1 | 6.0% |
| Example 16 | 2% | 2% | Formula 10 | 2% | 1:1:1 | 6.0% |
| Example 17 | 2% | 2% | Formula 11 | 2% | 1:1:1 | 6.0% |
| Example 18 | 2% | 2% | Formula 12 | 2% | 1:1:1 | 6.0% |
| Example 19 | 0.5% | 2% | Formula 1 | 2% | 1:4:4 | 4.5% |
| Example 20 | 1.0% | 2% | Formula 1 | 2% | 1:2:2 | 5.0% |
| Example 21 | 3.0% | 2% | Formula 1 | 2% | 1:0.67:0.67 | 7.0% |
| Example 22 | 5.0% | 2% | Formula 1 | 2% | 1:0.4:0.4 | 9.0% |
| Example 23 | 8.0% | 2% | Formula 1 | 2% | 1:0.25:0.25 | 12.0% |
| Example 24 | 10.0% | 2% | Formula 1 | 2% | 1:0.2:0.2 | 14.0% |
| Example 25 | 2% | 0.1% | Formula 1 | 2% | 1:0.05:1 | 4.1% |
| Example 26 | 2% | 0.5% | Formula 1 | 2% | 1:0.25:1 | 4.5% |
| Example 27 | 2% | 3.0% | Formula 1 | 2% | 1:1.5:1 | 7.0% |
| Example 28 | 2% | 5.0% | Formula 1 | 2% | 1:2.5:1 | 9.0% |
| Example 29 | 2% | 8.0% | Formula 1 | 2% | 1:4:1 | 12.0% |
| Example 30 | 2% | 2% | Formula 1 | 0.1% | 1:1:0.05 | 4.1% |
| Example 31 | 2% | 2% | Formula 1 | 0.5% | 1:1:0.25 | 4.5% |
| Example 32 | 2% | 2% | Formula 1 | 3.0% | 1:1:1.5 | 7.0% |
| Example 33 | 2% | 2% | Formula 1 | 5.0% | 1:1:2.5 | 9.0% |
| Example 34 | 1.0% | 0.7% | Formula 1 | 0.3% | 1:0.7:0.3 | 2.0% |
| Example 35 | 5.0% | 3.0% | Formula 1 | 2.0% | 1:0.6:0.4 | 10.0% |
| Example 36 | 2.0% | 8.0% | Formula 1 | 5.0% | 1:4:2.5 | 15.0% |
| Example 37 | 10.0% | 8.0% | Formula 1 | 2.0% | 1:0.8:0.2 | 20.0% |
| Example 38 | 1.0% | 0.1% | Formula 1 | 5.0% | 1:0.1:5 | 6.1% |
| Example 39 | 1.5% | 0.8% | Formula 1 | 3.0% | 1:0.5:2 | 5.3% |
| Example 40 | 1.2% | 3.6% | Formula 1 | 0.6% | 1:3:0.5 | 5.4% |
| Example 41 | 1.0% | 10.0% | Formula 1 | 0.1% | 1:10:0.1 | 11.1% |
| Comparative Example 1 | 2% | \ | \ | \ | 1:0:0 | 2% |
| Comparative Example 2 | 2% | 2% | \ | \ | 1:1:0 | 4% |
| Comparative Example 3 | 2% | \ | Formula 1 | 2% | 1:0:1 | 4% |
| Comparative Example 4 | \ | 2% | Formula 1 | 2% | 0:1:1 | 4% |

The cycle performance, storage performance, power performance, and gas production volume of the lithium-ion batteries obtained in Examples 1-41 and Comparative Examples 1-4 above are characterized, as shown in Table 2.

### (1) Test for cycle performance of lithium-ion battery

An ambient temperature is controlled at 25°C, a battery is subjected to charging to 3.65 V at 1 C, then charging to 0.05 C at a constant voltage, standing for 5 min, and then discharging to 2.5 V at 1 C, and a discharge capacity is recorded as C₀. 600 cycles are performed according to the foregoing charging-discharging process. A discharge capacity at the 600th cycle is C₁, with a cycle capacity retention rate = C₁/C₀*100%.

An ambient temperature is controlled at 60°C, a battery is subjected to charging to 3.65 V at 1 C, then charging to 0.05 C at a constant voltage, standing for 5 min, and then discharging to 2.5 V at 1 C, and a discharge capacity is recorded as C₂. 500 cycles are performed according to the foregoing charging-discharging process. A discharge capacity at the 500th cycle is C₃, with a cycle capacity retention rate = C₃/C₂*100%.

### (2) Test for storage performance of lithium-ion battery

An ambient temperature is controlled at 25°C, a battery is subjected to charging to 3.65 V at 1 C, then charging to 0.05 C at a constant voltage, and standing for 5 min which are indicated as a full charging process, and then discharging to 2.0 V at 1 C which is indicated a full discharging process. A discharge capacity is recorded as C₄ after the full discharging process. The full charging process is performed again to reach a 100% SoC state. The battery is then stored for 30 days with the ambient temperature controlled at 60°C. After 30 days, the ambient temperature is controlled at 25°C, a full discharging process and a full charging process are performed in sequence, then the battery is discharged to 2.0 V at 1 C and left to stand for 5 min, and a discharge capacity is recorded as C₅. Capacity retention rate after storage =C₅/C₄*100%.

### (3) Power performance test

A battery is subjected to charging to 3.65 V at 1 C, then charging to 0.05 C at a constant voltage, standing for 5 min, then discharging at 1 C for 0.5 h, and standing for 60 min, and a voltage V₁ after standing is recorded. Then battery is discharged at 2 C for 30 s, a sampling interval is 0.1 S, and a voltage V₂ at the end of discharging is recorded, with the DCR of the battery = (V₁-V₂)/I, I = 2C.

### (4) Gas production volume test

An ambient temperature is controlled at 25°C, a battery is subjected to charging to 3.65 V at 1 C, then charging to 0.05 C at a constant voltage, and standing for 5 min which are indicated as a full charging process, and then discharging to 2.0 V at 1 C which is indicated a full discharging process. The charging process is performed again to reach a 100% SoC state, and a measured volume of the battery is recorded as a volume of the battery before storage. The battery is then stored for 30 days with the ambient temperature controlled at 60°C. After 30 days, the battery is taken out and placed in an environment under 25°C, and is measured for a volume.

A gas production volume (ml) of a battery stored at 60°C for 30 days = the volume of the battery stored for 30 days - the volume of the battery before storage.

**Table 2**

| Examples | Battery Performance | | | | |
|---|---|---|---|---|---|
| | DCR (mΩ) | Capacity retention rate | | | Gas Production Volume during Storage at 60°C for 30 days (mL) |
| | | Capacity Retention Rate after 600 cycles at 25°C | Capacity Retention Rate after 500 cycles at 60°C | Capacity Retention Rate after Storage at 60°C for 30 d | |
| Example 1 | 40.4 | 92.20% | 86.90% | 92.80% | 36.2 |
| Example 2 | 46.3 | 90.70% | 85.60% | 90.30% | 35.8 |
| Example 3 | 38.9 | 89.80% | 83.60% | 88.90% | 37.1 |
| Example 4 | 45.7 | 88.80% | 82.80% | 85.60% | 37.2 |
| Example 5 | 41.5 | 91.90% | 85.90% | 91.00% | 37.1 |
| Example 6 | 48.2 | 91.00% | 84.70% | 88.10% | 34.8 |
| Example 7 | 40.9 | 90.10% | 84.00% | 87.70% | 37.5 |
| Example 8 | 46.8 | 89.80% | 83.00% | 85.10% | 36.8 |
| Example 9 | 40.5 | 91.70% | 87.20% | 92.10% | 36.2 |
| Example 10 | 41.2 | 92.70% | 87.50% | 91.20% | 35.7 |
| Example 11 | 40.7 | 90.20% | 83.50% | 89.80% | 37.2 |
| Example 12 | 41.4 | 92.40% | 84.80% | 92.40% | 35.8 |
| Example 13 | 43.5 | 92.20% | 85.60% | 92.20% | 36.6 |
| Example 14 | 42.1 | 91.00% | 86.70% | 91.70% | 35.9 |
| Example 15 | 43.9 | 91.10% | 85.60% | 89.90% | 38.9 |
| Example 16 | 42.7 | 89.50% | 84.30% | 85.80% | 36.7 |
| Example 17 | 41.5 | 90.30% | 85.90% | 83.20% | 39.2 |
| Example 18 | 39.9 | 91.50% | 84.70% | 85.70% | 38.7 |
| Example 19 | 38.5 | 85.90% | 81.80% | 83.50% | 37.6 |
| Example 20 | 39.2 | 86.70% | 82.30% | 84.00% | 38.1 |
| Example 21 | 41.5 | 93.10% | 87.30% | 92.90% | 35.6 |
| Example 22 | 47.8 | 93.30% | 87.20% | 92.60% | 36.8 |
| Example 23 | 50.8 | 93.80% | 87.50% | 92.50% | 37.2 |
| Example 24 | 60.3 | 93.20% | 87.50% | 92.30% | 36.8 |
| Example 25 | 50.8 | 87.90% | 83.70% | 89.10% | 36.5 |
| Example 26 | 48.6 | 88.50% | 84.90% | 90.20% | 37.3 |
| Example 27 | 39.6 | 88.80% | 84.80% | 89.90% | 40.1 |
| Example 28 | 38.7 | 86.20% | 82.10% | 89.50% | 42.3 |
| Example 29 | 38.3 | 83.10% | 79.30% | 85.70% | 45.8 |
| Example 30 | 40.2 | 82.90% | 76.10% | 85.30% | 44.1 |
| Example 31 | 38.2 | 84.50% | 79.50% | 86.70% | 40.7 |
| Example 32 | 47.4 | 93.10% | 87.50% | 93.10% | 36.1 |
| Example 33 | 50.3 | 93.20% | 87.80% | 93.10% | 35.9 |
| Example 34 | 39.8 | 73.20% | 71.30% | 82.00% | 37.9 |
| Example 35 | 46.3 | 93.10% | 86.50% | 92.10% | 38.1 |
| Example 36 | 43.2 | 84.40% | 81.50% | 86.70% | 44.2 |
| Example 37 | 48.5 | 84.70% | 80.80% | 86.20% | 45.2 |
| Example 38 | 46.5 | 85.70% | 82.20% | 85.90% | 40.2 |
| Example 39 | 40.6 | 87.30% | 84.70% | 85.80% | 36.2 |
| Example 40 | 34.1 | 85.10% | 82.30% | 83.70% | 40.7 |
| Example 41 | 36.5 | 74.70% | 73.10% | 73.90% | 55.1 |
| Comparative Example 1 | 49.9 | 78.20% | 69.50% | 80.00% | 43.1 |
| Comparative Example 2 | 41.5 | 81.50% | 75.30% | 84.90% | 44.3 |
| Comparative Example 3 | 52.2 | 86.70% | 82.60% | 88.80% | 35.3 |
| Comparative Example 4 | 41.9 | 82.70% | 76.80% | 83.50% | 42.1 |

In summary, in Table 1, Examples 1-41 are compared with Comparative Examples 1-4. The electrolyte solution additives used in Examples 1-41 include vinylene carbonate, methylene methanedisulfonate, and an alkynyl compound. However, the electrolyte solution additive in Comparative Example 1 only includes vinylene carbonate, the electrolyte solution additive in Comparative Example 2 only includes vinylene carbonate and methylene methanedisulfonate, the electrolyte solution additive in Comparative Example 3 only includes vinylene carbonate and an alkynyl compound, and the electrolyte solution additive in Comparative Example 4 only includes methylene methanedisulfonate and an alkynyl compound. It can be seen from Table 2 that the batteries in Examples 1-41 have excellent comprehensive performance relative to that in Comparative Examples 1-4. Although Examples 34 and 41 enable slightly lower capacity retention rates relative to Comparative Examples 1-2 and 4, the batteries in Examples 34 and 41 have relatively low DCRs. Although the batteries in Comparative Example 4 have excellent capacity retention rates and relatively low gas production volumes, the batteries have relatively large DCRs. The comparison of Examples 19-24 with Comparative Example 4 shows that the batteries in Examples 19-24 have higher capacity retention rates. The comparison of Examples 25-29 with Comparative Example 3 shows that the batteries in Examples 25-29 have relatively low DCRs. The comparison of Examples 30-33 with Comparative Example 2 shows that the batteries in Examples 30-33 have higher capacity retention rates and relatively low gas production volumes. Therefore, it is indicated that the electrolyte solution additive including vinylene carbonate, methylene methanedisulfonate, and an alkynyl compound in the present application may improve both the power performance and cycle performance of a battery. That is, the battery in the present application has excellent comprehensive performance.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the implementations without departing from the subject matter of the present application, and other implementations constructed by combining some of the constituent elements in the embodiments are also included in the scope of the present application.

## Claims

1. An electrolyte solution additive comprising vinylene carbonate, methylene methanedisulfonate, and an alkynyl compound, wherein the alkynyl compound comprises 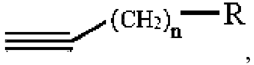 where N is 0-10, and R comprises 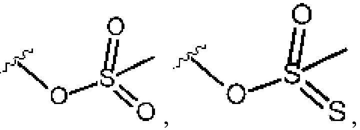 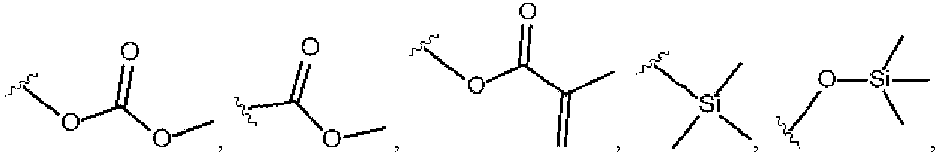 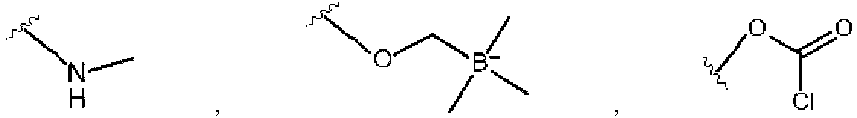 or

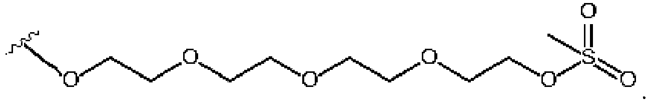

2. The electrolyte solution additive according to claim 1, wherein mass ratios of the vinylene carbonate and the methylene methanedisulfonate to the alkynyl compound are 1: 0.1-10: 0.1-5.

3. The electrolyte solution additive according to claim 1 or 2, wherein mass ratios of the vinylene carbonate and the methylene methanedisulfonate to the alkynyl compound are 1: 0.5-3: 0.5-2.

4. The electrolyte solution additive according to any one of claims 1 to 3, wherein the R comprises

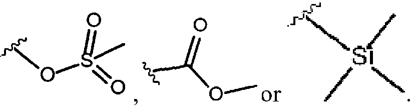

5. The electrolyte solution additive according to any one of claims 1 to 4, wherein the alkynyl compound comprises at least one of: 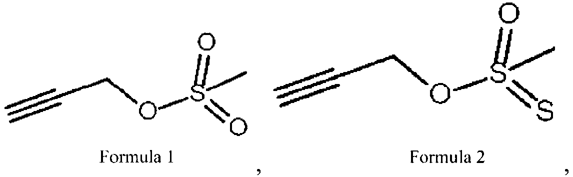 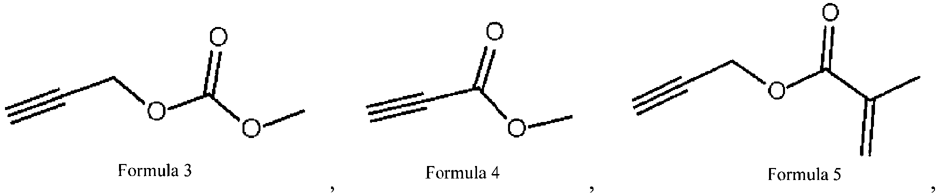 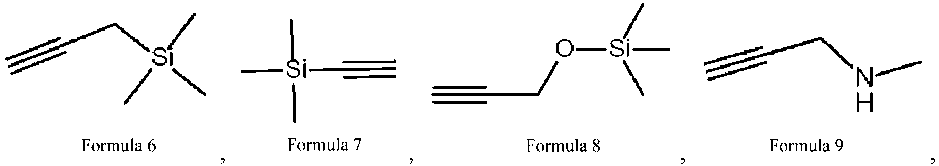 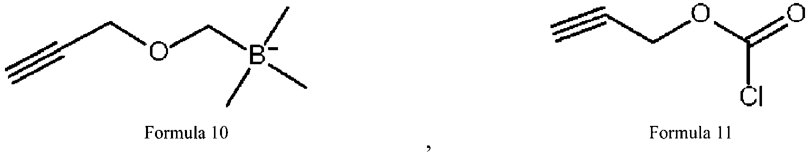 or

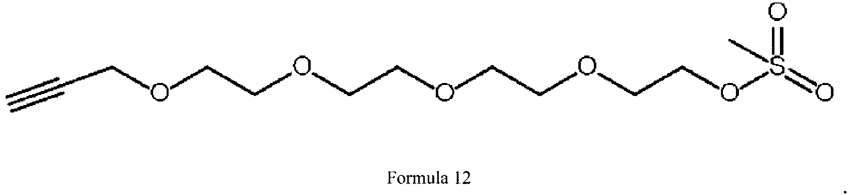

6. The electrolyte solution additive according to any one of claims 1 to 5, wherein the alkynyl compound comprises at least one of 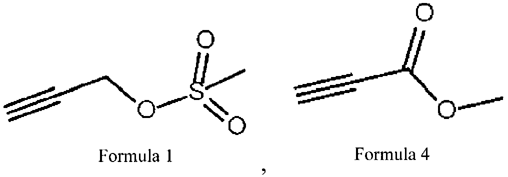 or

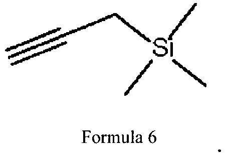

7. An electrolyte solution, comprising the electrolyte solution additive according to any one of claims 1 to 6.

8. The electrolyte solution according to claim 7, wherein based on a total mass of the electrolyte solution, a mass percentage of the electrolyte solution additive is 1%-20%.

9. The electrolyte solution according to claim 7 or 8, wherein based on the total mass of the electrolyte solution, the mass percentage of the electrolyte solution additive ranges from 2%-10%.

10. The electrolyte solution according to any one of claims 7 to 9, wherein based on the total mass of the electrolyte solution, a mass percentage of the vinylene carbonate is 0.5%-10%.

11. The electrolyte solution according to any one of claims 7 to 10, wherein based on the total mass of the electrolyte solution, the mass percentage of the vinylene carbonate is 1%-5%.

12. The electrolyte solution according to any one of claims 7 to 11, wherein based on the total mass of the electrolyte solution, a mass percentage of the methylene methanedisulfonate is 0.1%-8%.

13. The electrolyte solution according to any one of claims 7 to 12, wherein based on the total mass of the electrolyte solution, the mass percentage of the methylene methanedisulfonate is 0.5%-3%.

14. The electrolyte solution according to any one of claims 7 to 13, wherein based on the total mass of the electrolyte solution, a mass percentage of the alkynyl compound is 0.1%-5%.

15. The electrolyte solution according to any one of claims 7 to 14, wherein based on the total mass of the electrolyte solution, the mass percentage of the alkynyl compound is 0.5%-3%.

16. A battery, comprising the electrolyte solution according to any one of claims 7 to 15.

17. An electrical apparatus, comprising the battery according to claim 16.
